# EUROPEAN PATENT SPECIFICATION

(11) **EP 2 825 015 B1**
(45) Date of publication and mention of the grant of the patent: **11.05.2016**
(21) Application number: 13716408.3
(22) Date of filing: 20.02.2013
(51) Int. Cl.: A01C 7/04

(54) **A SEEDING GROUP AND A METHOD FOR ACTUATING A SEEDING GROUP**
SÄGRUPPE UND VERFAHREN ZUR BETÄTIGUNG EINER SÄGRUPPE
BLOC SEMIS ET SON PROCÉDÉ DE FONCTIONNEMENT

(30) Priority: 16.03.2012 IT BO20120139
(43) Date of publication of application: 21.01.2015
(73) Proprietor: Delta Progetti S.r.l., 44033 Berra (Ferrara) (IT)
(72) Inventor: BIGHI, Enrico, I-44033 Berra (Ferrara) (IT); PATTARO, Roberto, I-44033 Berra (Ferrara) (IT)
(74) Representative: Dall'Olio, Christian
(86) International application number: PCT/IB2013/051378
(87) International publication number: WO 2013/136203

(56) References cited:
- DE-A1- 10 134 991
- US-A1- 2011 046 776
- US-A1- 2011 120 356
- US-B1- 7 726 251

## Description

### FIELD OF INVENTION.

The present invention concerns the technical sector of seeding agricultural terrain; in particular the invention relates to a seeding group, which is part of a seeding machine, and to a method for actuating the seeding group.

### DESCRIPTION OF THE PRIOR ART

Document US 7,726,251 discloses a seeding group according to the preamble of claim 1.

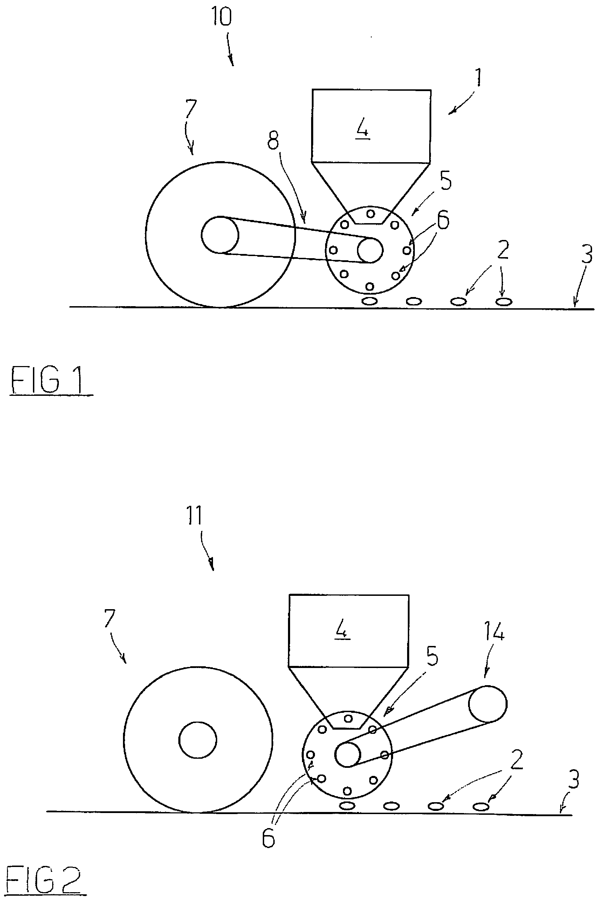

Figure 1 schematically illustrates a first seeding group (10) of known type, which is a part of a seeding machine (not illustrated); the first seeding group (10) has the task of releasing seeds (2) onto an agricultural terrain (3) in such a way that the seeds (2) are arranged along one or more rows and at a predetermined reciprocal distance.

The first seeding group (10) comprises a distributor (1) for releasing seeds (2) to fall on the agricultural terrain (3), which distributor (1) in turn comprises: a hopper (4) containing the seeds (2); a rotarybatching disc (5) provided with a plurality of seatings (6) for seeds, equidistanced angularly to one another, which batching disc (5) is supplied by the hopper (4); and aspirating means, not illustrated, such as to retain the seeds (2) in the respective seatings (6) of the batching disc (5). The aspirating action of the aspirating means is interrupted at a circular section: when a seating (6) transits at the circular sector the seed (2) contained therein is disengaged and falls onto the underlying agricultural terrain (3).

The first seeding group (10) further comprises an idle wheel (7) constrained to the frame (also not illustrated) of the seeding machine, which idle wheel (7) is maintained pressed on the agricultural terrain (3) so as to rotate when the seeding machine advances on the agricultural terrain (3); the wheel (7) is connected by a belt transmission (8) with the batching disc (5), so as to draw the disc (5) in rotation. When the seeding machine is moved, the wheel (7) rotates and draws the batching disc (5) in rotation, with a consequent regular release of seeds (2) onto the agricultural terrain (3); in order to regulate the seed (2) released in this way, a specific reduction is necessary between the wheel (7) and the batching disc (5).

An advantage of this first seeding group consists in the fact that an immediate and corresponding variation of drive of the batching disc corresponds to an acceleration/deceleration of the wheel.

The drawbacks are as follows.

The batching disc opposes a certain degree of inertia to rotation and this can lead to a skidding of the wheel drawing it, i.e. a temporary dragging of the wheel on the terrain such as to slow down or interrupt the release of the seeds from the batching disc: as a consequence, the seeds released onto the ground exhibit a greater and unforseen reciprocal distance. The probability of the wheel's skidding increases if, as often happens, the wheel draws a plurality of batching discs in rotation.

Further, the mechanical transmission leads to problems as follow: variation of the seeding distance (for each type of seed there exists an optimal distance between the seeds released onto the terrain); and the selective blocking of one or more batching discs during the advancing of the seeding machine so that one or more rows of the agricultural terrain are left out of seeding.

A second seeding group, not illustrated in the figures, is differentiated from the first seeding group due to the fact that the belt transmission between the wheel and the batching disc is not included.

Further, the second seeding group additionally comprises: an actuator which draws the batching disc in rotation; a sensor; and a control unit receiving the signals from the sensor and commands the actuator such as to daw the batching disc in rotation and thus regulate the release of the seeds onto the ground. The sensor is a velocity sensor which detects the advancing velocity of the seeding machine in which the second seeding group is integrated.

The second seeding group can also comprise a control panel which enables setting some parameters for the control unit; thus the seeding distance can be modified, or some rows can be left unseeded, and so on.

It is observed that the wheel does not exhibit skidding phenomena due to the fact that it no longer draws in rotation the batching disc. Consequently, the sensor can be connected to the wheel to detect the advancing velocity of the seeding machine.

Thus the drawbacks of the first seeding group are obviated. Additionally, a majority of the mechanical kinematisms is replaced by electric cabling with a consequent reduction of the weight of the second seeding group with respect to the first.

However, the second seeding group exhibits the drawback of being imprecise during the acceleration/deceleration steps of the seeding machine; in other words the batching disc cannot satisfactorily follow the variations in velocity of the seeding machine, which can lead to a wrong release of seeds onto the agricultural terrain (the predetermined seeding distances are not respected).

### SUMMARY OF THE INVENTION.

The aim of the present invention consists in providing a seeding group which obviates the drawbacks typical of the prior art, as described above.

The aim is attained by means of a seeding group according to claim 1 and a method for actuating a seeding group according to claim 5.

It is possible to calculate, instant by instant, the theoretical angular position which the batching disc must assume according to the actual distance of the seeding group with respect to the reference point that is fixed in space; once this theoretical angular position is calculated, the batching disc can be commandedly rotated correspondingly.

The batching disc can advantageously be activated to follow, with an effective and precise dynamic, the accelerations/decelerations of theseeding group which can be deduced by detecting the position of the seeding group with respect to a reference point that is fixed in space.

In other words, the use of a position sensor instead of a velocity sensor, as in the prior art, has been shown to be crucial for reaching the predetermined aim.

### BRIEF DESRIPTION OF THE DRAWINGS.

Specific embodiments of the invention will be described in the following description, according to what is set out in the claims and with the aid of the accompanying tables of drawings, in which:
Figure 1 schematically illustrates a first seeding group of known type;
Figure 2 schematically and partially illustrates a seeding group according to the present invention;
Figure 3 is a block diagram which illustrates the functional connection between some components that are a part of theseeding group of figure 2.

### DESCRIPTION OF THE PREFERRED EMBODIMENTS.

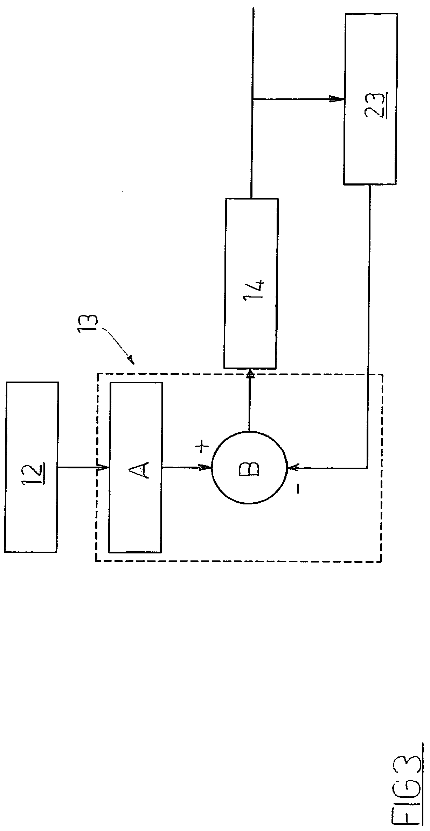

In the following, explicit reference with be made to figures 2, 3; the characteristics of figures 2, 3 that are identical to those of figure 1 will be denoted using the same numerical references.

The numeral (11) denotes in its entirety the seeding group that is the object of the present invention, which can be an integral part of a seeding machine (not illustrated). The seeding group (11) has the task of releasing seeds (2) onto an agricultural terrain (3) so that the seeds (2) become arranged along one or more rows and at a predetermined reciprocal distance.

The seeding group (11) comprises: a distributor (1) for releasing seeds (2) to fall onto a terrain (3), comprising a rotary batching disc (5) provided with a plurality of seatings (6) for seeds (2), release of a seed (2) from a corresponding seating (6) occurring when the seating (6) runs through a predetermined circular sector; a first sensor (12); a control unit (13) which receives the signal emitted by the first sensor (12) and commands rotation of the batching disc (5) for regulating release of the seeds (2) on the terrain (3).

The first sensor (12) is a position sensor that detects a position of the seeding group (11) with respect to a reference point that is fixed in space (not illustrated in the figures).

The seatings (6) of the batching disc (5) are preferably equidistanced angularly to one another.

The terrain is for example an agricultural terrain (3).

The distributor (1), in itself of known type, can comprise: a hopper (4) containing the seeds (2); and aspirating means, not illustrated, for retaining the seeds (2) in the respective seatings (6) of the batching discs (5). The batching disc (5) can be supplied by the hopper (4).The aspirating action of the aspirating means is interrupted at the circular sector: thus when a seating (6) transits at the circular sector the seed (2) contained therein is disengaged and falls onto the underlying agricultural terrain.

The batching disc (5) is for example vertically arranged; the above-cited circular sector can correspond in this case to the position in which the seating (6) is closer to the underlying agricultural terrain (3).

The seeding group (11) can further comprise an idle wheel (7) constrained to the frame (also not illustrated) of the seeding machine, which idle wheel (7) is maintained pressed on the agricultural terrain (3) such as to roll when the seeding machineadvances on the agricultural terrain (3); the first sensor (12) (illustrated only schematically in figure 3) can be for example an encoder keyed on the wheel (7) or a phonic wheel keyed on the wheel (7).

Alternatively, the first position sensor (12) can be a GPS.

When the seeding machine is stationary, the reference point fixed in space can correspond for example to the position assumed by theseeding machine itself, to which position the position detected by the encoder or the phonic wheel or the GPS is associable.

The seeding group (11) comprises a second sensor (23) (illustrated only schematically in figure 3) that is a position sensor for detecting an angular position of the batching disc (5); in this case the control unit (13) receives a signal emitted by the second sensor (23).

The seeding group (11) comprises an actuator (14), for example an electric motor, which draws the batching disc (5) in rotation; the control unit (13) acts, in this case, directly on the actuator (14) such as to control the release of seeds (2) by the batching disc (5).

The control unit (13) can implement a feedback system in which an amount proportional to the signal received from the first sensor (12) is compared with an amount proportional to the signal received from the second sensor (23) with the aim of controlling the angular position assumed by the batching disc (5).

In detail, see figure 3, the signal in output from the first sensor (12) can be sent to a first block (A) of the control unit (13); the block (A) emits in output a signal that is proportional to the reduction ratio desired. The reduction ration can be varied by the user, for example via a control panel not illustrated in the figures: in this way it is for example possible to set the distance that the seeds (2) released on the agricultural terrain (3) must have with respect to one another.

The control unit (13) further comprises a second block (B) for comparison which receives in input the output signal from the first block (A) and the signal coming from the second sensor (23), possibly amplified; the second block (B) for comparison carries out a difference between the signal in output from the first block (A) and the signal proportional to the signal in output from the second sensor (23); the outcome of this difference serves to pilot the actuator (14), with a proportionality factor.

A method is also defined for activating a seeding group, comprising following steps: activating a rotary batching disc (5) provided with a plurality of seatings (6) for seeds (2), release of a seed (2) from the corresponding seating (6) occurring when the seating (6) displaces through a predetermined circular sector; detecting a position of the seeding group with respect to a reference point that is fixed in space; commanding rotation of the batching disc (5) on the basis of the detection, in order to regulate the release of seeds (2) on the terrain (3).

Additionally, the method can comprise following steps: detecting the angular position of the batching disc (5); performing a comparison between the detected position of the seeding group and the detected angular position of the batching disc (5) and consequently commanding the rotation of the batching disc (5) such as to regulate the release of seeds (2) onto the terrain (3).

The foregoing has been described by way of non-limiting example, and any constructional variations are understood to fall within the protective scope of the present technical solution, as claimed in the following.

## Claims

1. A seeding group (11), comprising:
a distributor (1) for releasing seeds (2) to fall on a terrain (3), comprising a rotary batching disc (5) provided with a plurality of seatings (6) for seeds (2), release of a seed (2) from a corresponding seating (6) occurring when the seating (6) runs through a predetermined circular sector;
a first sensor (12);
a second sensor (23),
an actuator (14), which draws the batching disc (5) in rotation;
a control unit (13) which receives the signal emitted by the first sensor (12) and a signal emitted by the second sensor (23) and commands the actuator to draw in rotation of the batching disc (5) for regulating release of the seeds (2) on the terrain (3);
the control unit (13) implementing a feedback system in which an amount proportional to the signal received from the first sensor (12) is compared with an amount proportional to the signal received from the second sensor (23) with the aim of controlling the angular position assumed by the batching disc (5);
**characterised in that**:
the first sensor (12) is a position sensor that detects a position of the seeding group (11) with respect to a reference point that is fixed in space;
the second sensor (23) is a position sensor for detecting an angular position of the batching disc (5);
and in which the control unit (13) comprises: a first block (A), that receives the signal in output from the first sensor (12) and emits in output a signal that is proportional to the reduction ratio desired; and a second block (B) for comparison, which receives in input the output signal from the first block (A) and the signal coming from the second sensor (23), possibly amplified; the second block (B) for comparison carrying out a difference between the signal in output from the first block (A) and the signal proportional to the signal in output from the second sensor (23), the outcome of this difference being used to pilot the actuator (14), with a proportionality factor.

2. The group of the preceding claim, comprising a wheel (7) for rolling on the terrain (3), wherein the first position sensor (12) is an encoder keyed on the wheel (7) or a phonic wheel (7) keyed on the wheel (7) or a GPS detector.

3. The group of any one of claims 1 or 2, wherein the second sensor (23) is an encoder keyed on the shaft that draws the batching disc (5) or a phonic wheel (7) keyed on the shaft which draws the batching disc (5).

4. A seeding machine, comprising the seeding group according to any one of the preceding claims.

5. A method for activating a seeding group, comprising following steps: activating a rotary batching disc (5) provided with a plurality of seatings (6) for seeds (2), release of a seed (2) from the corresponding seating (6) occurring when the seating (6) displaces through a predetermined circular sector;
the method being **characterised in that** it comprises following steps:
detecting a position of the seeding group with respect to a reference point that is fixed in space;
detecting the angular position of the batching disc (5); performing a comparison between the detected position of the seeding group and the detected angular position of the batching disc (5) and consequently commanding the rotation of the batching disc (5) on the basis of the detection such as to regulate the release of seeds (2) onto the terrain (3).

## Patentansprüche

1. Säaggregat (11), Folgendes beinhaltend:
einen Verteiler (1) zur Ausgabe von Saatkörnern (2), damit diese auf einen Boden (3) fallen, beinhaltend eine rotierende Dosierscheibe (5), die mit einer Vielzahl von Aufnahmen (6) für Saatkörner (2) ausgestattet ist,
wobei die Ausgabe eines Saatkorns (2) aus einer entsprechenden Aufnahme (6) erfolgt, wenn die Aufnahme (6) einen vorbestimmten Kreissektor durchläuft;
einen ersten Sensor (12);
einen zweiten Sensor (23);
einen Stellantrieb (14), der die Dosierscheibe (5) in Drehbewegung versetzt;
eine Steuereinheit (13), die das von dem ersten Sensor (12) ausgesendete Signal und ein von dem zweiten Sensor (23) ausgesendetes Signal empfängt und an den Stellantrieb den Befehl ausgibt, die Dosierscheibe (5) in Drehbewegung zu versetzen, um die Ausgabe der Saatkörner (2) auf den Boden (3) zu regulieren;
wobei die Steuereinheit (13) ein Rückkopplungssystem implementiert, in dem eine zu dem vom ersten Sensor (12) empfangenen Signal proportionale Größe mit einer zu dem vom zweiten Sensor (23) empfangenen Signal proportionalen Größe verglichen wird, um die von der Dosierscheibe (5) eingenommene Winkelposition zu kontrollieren;
**dadurch gekennzeichnet, dass**:
der erste Sensor (12) ein Positionssensor ist, der die Lage des Säaggregats (11) relativ zu einem im Raum festgelegten Bezugspunkt erkennt;
der zweite Sensor (23) ein Positionssensor zur Erkennung einer Winkelposition der Dosierscheibe (5) ist;
und worin die Steuereinheit (13) Folgendes beinhaltet: einen ersten Block (A), der das vom Ausgang des ersten Sensors (12) kommende Signal empfängt und der an seinem Ausgang ein Signal bereitstellt, das proportional zu dem gewünschten Untersetzungsverhältnis ist; und einen dem Vergleich dienenden zweiten Block (B), der an seinem Eingang das Ausgangssignal vom ersten Block (A) und das vom zweiten Sensor (23) kommende, möglicherweise verstärkte, Signal empfängt; wobei der für den Vergleich dienende zweite Block (B) eine Differenzbestimmung zwischen dem vom ersten Block (A) ausgegeben Signal und dem zu dem vom zweiten Sensor (23) ausgegebenen Signal proportionalen Signal ausführt und das Ergebnis dieser Differenzbestimmung zur Ansteuerung des Stellantriebs (14), mit einem Proportionalitätsfaktor, verwendet wird.

2. Aggregat nach dem vorhergehenden Anspruch, beinhaltend ein Rad (7) zum Rollen auf dem Boden (3), worin der erste Positionssensor (12) ein auf das Rad (7) gekeilter Encoder oder ein auf das Rad (7) gekeiltes Geberrad (7) oder ein GPS-Ortungsgerät ist.

3. Aggregat nach einem der Ansprüche 1 oder 2, worin der zweite Sensor (23) ein auf die Mitnehmerwelle der Dosierscheibe (5) gekeilter Encoder oder ein auf die Mitnehmerwelle der Dosierscheibe (5) gekeiltes Geberrad (7) ist.

4. Sämaschine, beinhaltend das Säaggregat nach einem der vorhergehenden Ansprüche.

5. Verfahren zum Aktivieren eines Säaggregats, folgende Schritte beinhaltend: Aktivierung einer rotierenden Dosierscheibe (5), die mit einer Vielzahl von Aufnahmen (6) für Saatkörner (2) ausgestattet ist, und Ausgabe eines Saatkorns (2) von der entsprechenden Aufnahme (6), die dann erfolgt, wenn sich die Aufnahme (6) durch einen vorbestimmten Kreissektor bewegt;
wobei das Verfahren **dadurch gekennzeichnet ist, dass** es folgende Schritte beinhaltet:
Erkennen einer Lage des Säaggregats relativ zu einem im Raum festgelegten Bezugspunkt;
Erkennen der Winkelposition der Dosierscheibe (5); Ausführen eines Vergleichs zwischen der erkannten Lage des Säaggregats und der erkannten Winkelposition der Dosierscheibe (5) und dementsprechendes Ansteuern der Drehung der Dosierscheibe (5) auf Grundlage der Erkennung, um die Ausgabe von Saatkörnern (2) auf den Boden (3) zu regulieren.

## Revendications

1. Un groupe d'ensemencement (11), comprenant:
un distributeur (1) pour libérer des graines (2) destinées à tomber sur un terrain (3), comprenant un disque doseur (5) rotatif comportant une pluralité d'alvéoles (6) pour les graines (2), la libération d'une graine (2) d'une alvéole (6) correspondante s'opérant quand l'alvéole (6) parcourt un secteur circulaire prédéfini ;
un premier capteur (12) ;
un deuxième capteur (23) ;
un actionneur (14), qui met le disque doseur (5) en rotation ;
une unité de commande (13) qui reçoit le signal émis par le premier capteur (12) et un signal émis par le deuxième capteur (23) et commande l'actionneur pour la mise en rotation du disque doseur (5) afin de réguler la libération des graines (2) sur le terrain (3) ;
l'unité de commande (13) mettant en oeuvre un système de rétroaction dans lequel une grandeur proportionnelle au signal reçu du premier capteur (12) est comparée avec une grandeur proportionnelle au signal reçu du deuxième capteur (23) dans le but de contrôler la position angulaire prise par le disque doseur (5) ;
**caractérisé en ce que** :
le premier capteur (12) est un capteur de position qui détecte une position du groupe d'ensemencement (11) par rapport à un point de référence qui est fixe dans l'espace ;
le deuxième capteur (23) est un capteur de position destiné à détecter une position angulaire du disque doseur (5) ;
et dans lequel l'unité de commande (13) comprend : un premier bloc (A), qui reçoit le signal en sortie du premier capteur (12) et émet en sortie un signal qui est proportionnel au rapport de réduction désiré ; et un deuxième bloc (B) de comparaison, qui reçoit en entrée le signal de sortie du premier bloc (A) et le signal provenant du deuxième capteur (23), si possible amplifié ; le deuxième bloc (B) de comparaison effectuant une différence entre le signal en sortie du premier bloc (A) et le signal proportionnel au signal en sortie du deuxième capteur (23), le résultat de cette différence étant utilisé pour piloter l'actionneur (14), avec un facteur de proportionnalité.

2. Le groupe selon la revendication précédente, comprenant une roue (7) pour rouler sur le terrain (3), dans lequel le premier capteur de position (12) est un encodeur calé sur la roue (7) ou une roue phonique (7) calée sur la roue (7) ou un détecteur GPS.

3. Le groupe selon l'une quelconque des revendications 1 ou 2, dans lequel le deuxième capteur (23) est un encodeur calé sur l'arbre qui entraîne le disque doseur (5) ou une roue phonique (7) calée sur l'arbre qui entraîne le disque doseur (5).

4. Une machine à ensemencer, comprenant le groupe d'ensemencement selon l'une quelconque des revendications précédentes.

5. Un procédé pour l'actionnement d'un groupe d'ensemencement, comprenant les phases suivantes :
actionner un disque doseur (5) rotatif comportant une pluralité d'alvéoles (6) pour des graines (2), la libération d'une graine (2) de l'alvéole (6) correspondante s'opérant quand l'alvéole (6) parcourt un secteur circulaire prédéfini;
le procédé étant **caractérisé en ce qu'**il comprend les phases suivantes:
détecter une position du groupe d'ensemencement par rapport à un point de référence qui est fixe dans l'espace;
détecter la position angulaire du disque doseur (5) ;
effectuer une comparaison entre la position détectée du groupe d'ensemencement et la position angulaire détectée du disque doseur (5) et commander en conséquence la rotation du disque doseur (5), en fonction de la détection, de manière à réguler la libération de graines (2) sur le terrain (3).
